(19) Europäisches Patentamt / European Patent Office / Office européen des brevets

(11) **EP 4 461 702 B1**

(12) **EUROPÄISCHE PATENTSCHRIFT**

(45) Veröffentlichungstag und Bekanntmachung des Hinweises auf die Patenterteilung:
**03.06.2026  Patentblatt 2026/23**

(21) Anmeldenummer: **24162785.0**

(22) Anmeldetag: **11.03.2024**

(51) Internationale Patentklassifikation (IPC):
***C01B 3/38*** (2026.01)

(52) Gemeinsame Patentklassifikation (CPC):
**C01B 3/382; C01B 3/34;** C01B 2203/0244;
C01B 2203/1241; C01B 2203/1247;
C01B 2203/142; C01B 2203/16

(54) **VERFAHREN ZUM SICHEREN BETREIBEN EINES REFORMERS MIT VERSCHIEDENEN KOHLENWASSERSTOFFGEMISCHEN**

METHOD FOR SAFELY OPERATING A REFORMER WITH VARIOUS HYDROCARBON MIXTURES

PROCÉDÉ DE FONCTIONNEMENT SÛR D'UN REFORMEUR DOTÉ DE DIFFÉRENTS MÉLANGES D'HYDROCARBURES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: 14.03.2023  DE 102023106377
14.03.2023  LU 103087

(43) Veröffentlichungstag der Anmeldung:
**13.11.2024  Patentblatt 2024/46**

(73) Patentinhaber:
• **thyssenkrupp Uhde GmbH**
**44141 Dortmund (DE)**
• **thyssenkrupp AG**
**45143 Essen (DE)**

(72) Erfinder: **Meißner, Christoph**
**44534 Lünen (DE)**

(74) Vertreter: **thyssenkrupp Intellectual Property GmbH**
**ThyssenKrupp Allee 1**
**45143 Essen (DE)**

(56) Entgegenhaltungen:
US-A1- 2002 172 630    US-A1- 2015 086 888
US-A1- 2023 002 225

• **CHAN S.H. ET AL: "Effect of natural gas composition on autothermal fuel reforming products", vol. 64, no. 1-3, 1 May 2000 (2000-05-01), NL, pages 221 - 239, XP093083684, ISSN: 0378-3820, Retrieved from the Internet <URL:https://pdf.sciencedirectassets.com/ 271404/1-s2.0-S0378382000X00513/ 1-s2.0-S0378382000000655/main.pdf? X-Amz-Security-Token=IQoJb3JpZ2luX2VjEOj//// ////// wEaCXVzLWVhc3QtMSJIMEYCIQCsRLc Ba7mkh7rM+1x0LbYvgCFT FUx5G2GqtzGrX3M2BwlhAKgeTWX7JzrGGO4R YLWIBNGa9rWrUs/Hlyx8wozUewDNKrsFCND///// /////wEQBRoMMDU5MDAzN> DOI: 10.1016/ S0378-3820(00)00065-5**

EP 4 461 702 B1

## Beschreibung

Die Erfindung betrifft ein Verfahren zum Betreiben eines Reformers, insbesondere eines Sekundärreformers, autothermer Reformers oder POX Reformers, welcher insbesondere mit sich unterscheidenden Erdgaszusammensetzungen betrieben wird.

Ein Reformer, bestehend aus einem Primärreformer und einem Sekundärreformer, dient zur Herstellung von Wasserstoff, beispielsweise aus Erdgas. In einem ersten Schritt erfolgt im Primärreformer eine Dampfreformierung, an den sich ein zweiter Schritt mit einer partiellen Oxidation im Sekundärreformer anschließt. Der Sekundärreformer ist zumeist ein autothermer Reformer. Als Primärreformer kann auch ein sogenannter Pre-Reformer verwendet werden oder der Primärreformer kann aus einem Pre-Reformer und einem Dampfreformer bestehen. Dieses ist besonders üblich für eine anschließende Ammoniaksynthese. Hierzu wird zunächst in einem Primärreformer das Erdgas zunächst thermisch behandelt. Vor einem Sekundärreformer wird üblicherweise Luft zugeführt. Zum einen wird damit Sauerstoff für eine Verbrennung von Erdgas und damit für die Bereitstellung von Wärme eingebracht, zum anderen Stickstoff, welcher als zweites Edukt für die Ammoniaksynthese benötigt wird. Im Idealfall schließt sich an den Reformer eine CO Konvertierung und eine Kohlendioxidabtrennung an, sodass danach im Idealfall ein Gasgemisch Wasserstoff und Stickstoff im Verhältnis (im weiteren Verlauf als H:N Verhältnis bezeichnet) - 3:1 vorliegt.

Daher ist das Gas-Luft-Verhältnis (Menge an dem Primärreformer zugeführtem Erdgas zu Menge an dem Sekundärreformer zugeführter Luft) relevant und wird üblicherweise zur Regelung verwendet. Dieses Verhältnis wird während des Betriebes üblicherweise variiert, beispielsweise bei geänderter Erdgaszusammensetzung. Hierbei erfolgt üblicherweise eine Kompensation für Druck und Temperatur da üblicherweise Volumenströme gemessen und geregelt werden und nicht Stoffströme. Wird zu viel Luft zugeführt, so verursacht dies ein falsches H:N Verhältnis im späteren Synthesegas, was gegebenenfalls ungeeignet oder deutlich weniger effizient verwendet werden kann. Weiterhin tritt vor allem eine Erhöhung der Temperatur im Sekundärreformer auf, welches zu Beschädigungen in der Anlage führt. Da die Temperatur kritisch werden kann, wird anlagentechnisch ein Grenzwert für das Gas-Luftverhältnis definiert, bei dessen Unterschreiten ein automatisches Abschalten erfolgt, um die Vorrichtung vor Schäden zu schützen. Aus der DE 10 2022 200 572 ist eine beispielhafte Ammoniakanlage gezeigt.

Hierbei wird eine Anlage üblicherweise auf eine bestimmte Erdgaszusammensetzung ausgelegt. Wird eine Anlage aus einer benachbarten Erdgasquelle gespeist, so kann von einer vergleichsweise konstanten Zusammensetzung ausgegangen werden. Es gibt jedoch auch Fälle, in denen Erdgas aus unterschiedlichen Quellen und damit mit unterschiedlichen Zusammensetzungen Verwendung findet. Hierbei kann beispielsweise und insbesondere auch der Kohlendioxidgehalt schwanken, was einen besonders starken Effekt erzeugt. Dadurch unterscheidet sich aber der Luftbedarf teilweise deutlich. Wird eine Anlage somit auf solch einen Betrieb ausgelegt ergibt sich ein Problem. Das Gas-Luft-Verhältnis muss nun so gewählt werden, dass die Anlage mit den verschiedenen Zusammensetzungen betrieben werden kann. Dieses führt aber dazu, dass während des Betriebs mit einem Erdgas, welches ein höheres Gas-Luft-Verhältnis benötigt, der Abstand zu dem gesetzten Grenzwert sehr groß, was wiederum das Risiko einer Überhitzung erhöht. Auf der anderen Seite wird der Betrieb für ein Erdgas, welches ein geringes Gas-Luft-Verhältnis benötigt schwieriger, da der Spielraum durch den Grenzwert stark eingeschränkt wird.

US 2002/172630 A1 offenbart ein Verfahren zur Herstellung von Wasserstoff durch autothermische Reformierung von Kohlenwasserstoffen. Die Kohlenwasserstoffe können Methan, Ethan, Propan und Butan enthalten. Die Menge an benötigtem Sauerstoff wird berechnet abhängig von der Zusammensetzung der Kohlenwasserstoffe. Dabei wird eine Überhitzung des Reformers vermieden.

Aufgabe der Erfindung ist es, ein Verfahren bereit zu stellen, dass den sicheren Betrieb unabhängig von der Zusammensetzung des verwendeten Erdgases ermöglicht.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient zum Betreiben eines Reformers, insbesondere eines Reformers einer Anlage zur Herstellung von Ammoniak. Der Reformer wird wenigstens mit einem ersten Kohlenwasserstoffgemisch und einem zweiten Kohlenwasserstoffgemisch betrieben. Insbesondere handelt es sich bei den Kohlenwasserstoffgemischen um Erdgase unterschiedlicher Zusammensetzung, beziehungsweise um ein Kohlenwasserstoffgemisch mit schwankender Zusammensetzung. Die Kohlenwasserstoffgemische können neben Kohlenwasserstoffen auch andere Bestandteile ausweisen. Üblicherweise weisen diese Kohlenwasserstoffgemische zusätzlich Kohlenmonoxid, Kohlendioxid, Wasserstoff und/oder Stickstoff auf. Der Reformer weist einen Primärreformer auf, dem Primärreformer wird ein erster Gasstrom zugeführt. Der Reformer weist weiter einen Sekundärreformer auf. Dem Sekundärreformer wird der Halbproduktgasstrom aus dem Primärreformer und ein Luftstrom zugeführt. Aus dem ersten Gasstrom und dem Luftstrom wird der Quotient aus erster Gasstrom dividiert durch Luftstrom gebildet. Es wird ein Schwellwert vorgegeben. Üblicherweise wird der Schwellwert nach dem Stand der Technik für den Quotienten aus erstem Gasstrom dividiert durch den Luftstrom vorgegeben und mit diesem verglichen. Bei einem Unterschreiten des Schwellwertes wird der Reformer abgeschaltet, um eine Beschädigung durch Überhitzung zu vermeiden.

Bevorzugt werden der erste Gasstrom und der Luftstrom als Stoffströme in mol/s erfasst und berechnet. Diese können auch anders erfasst werden. Wesentlich ist, dass diese immer in gleicher Weise erfasst und berechnet werden.

Erfindungsgemäß wird der Schwellwert verglichen mit dem Produkt aus dem Quotient aus erster Gasstrom durch Luftstrom multipliziert mit einem Faktor H, wobei der Faktor vorgegeben wird in Abhängigkeit von der chemischen Zusammensetzung des ersten Gasstromes. Der Schwellwert ist vergleichsweise tief in dem Sicherheitssystem der Anlage integriert und kann daher selber nur aufwändig geändert werden, um die Sicherheit der Anlage zu gewährleisten. Die Verwendung des Faktor H ermöglicht eine Anpassung im laufenden Betrieb, der anhand einer verifizierten Erdgaszusammensetzung ermittelt werden kann.

Werden in einer Anlage beispielsweise genau zwei und in der jeweiligen Zusammensetzung bekannte Kohlenwasserstoffgemische eingesetzt, so können die beiden Faktoren H bei der Auslegung vorgegeben werden, sodass die Anlage im laufenden Betrieb quasi von einem Betriebszustand mit dem ersten Kohlenwasserstoffgemisch auf einen anderen Betriebszustand mit dem zweiten Kohlenwasserstoffgemisch umgeschaltet werden kann. Für das erste Kohlenwasserstoffgemisch wird beispielsweise der Faktor H(1) vorgegeben und für das zweite Kohlenwasserstoffgemisch der Faktor H(2). Sollte später auch ein drittes Kohlenwasserstoffgemisch verwendet werden, so kann für dieses dritte Kohlenwasserstoffgemisch ebenfalls der Faktor H(3) für das dritte Kohlenwasserstoffgemisch ermittelt werden.

In einer weiteren Ausführungsform der Erfindung ist der Sekundärreformer ein autothermer Reformer.

In einer weiteren Ausführungsform der Erfindung ist der Primärreformer ein Pre-Reformer oder weist einen Pre-Reformer auf.

In einer weiteren Ausführungsform der Erfindung wird der Faktor H entsprechend der Stoffmengenkonzentration von Methan, Ethan, Propan und Butan vorgegeben. In Erdgas ist Methan üblicherweise die Hauptkomponente. Ja nach Ursprung des Erdgases finden sich aber auch längerkettige Kohlenwasserstoffe. Hierbei umfasst Butan, n-Butan und 2-Methylpropan. Stoffmengenkonzentration wird in mol/mol angegeben.

In einer weiteren Ausführungsform der Erfindung wird der Faktor H entsprechend der Stoffmengenkonzentration von Methan, Ethan, Propan, Butan, Pentan und Hexan vorgegeben. Somit werden auch geringe Mengen der eigentlich flüssigen Kohlenwasserstoffe berücksichtigt. Auch hier umfassen Pentan und Hexan jeweils alle Isomere.

In einer weiteren Ausführungsform der Erfindung wird der Faktor H entsprechend der Stoffmengenkonzentration von Methan, Ethan, Propan, Butan, Pentan, Hexan, Kohlenmonoxid, Wasserstoff und Stickstoff vorgegeben. Somit können auch im Kohlenwasserstoffgemisch enthaltene weitere Komponenten berücksichtigt werden.

In einer weiteren Ausführungsform der Erfindung wird der Faktor H vorgegeben wird als:

$$H = \frac{F(aktuell)}{F(0)}$$

Hierbei ist F(aktuell) ein F Wert der aktuellen Gaszusammensetzung und F(0) ist der F-Wert der Gaszusammensetzung, für die der Reformer ausgelegt und für die der Schwellwert vorgegeben ist.

Der F-Wert sich nach der Formel berechnet:

$$F = \frac{6N(C1) + 14N(C2) + 20N(C3) + 26N(C4) + 32N(C5) + 38N(C6) + 2N(CO) + 2N(H) - 6N(N)}{100}$$

Hierbei sind $N(C1)$ die Stoffmengenkonzentration an $CH_4$, $N(C2)$ die Stoffmengenkonzentration an $C_2H_6$, $N(C3)$ die Stoffmengenkonzentration $C_3H_8$, wobei $N(C4)$ die Stoffmengenkonzentration $C_aH_{10}$, $N(C5)$ die Stoffmengenkonzentration $C_5H_{12}$, $N(C6)$ die Stoffmengenkonzentration $C_6H_{14}$, $N(CO)$ die Stoffmengenkonzentration an Kohlenmonoxid, $N(H)$ die Stoffmengenkonzentration an Wasserstoff und $N(N)$ die Stoffmengenkonzentration an Stickstoff.

Der besondere ist, dass durch diesen spezifischen Faktor H eine sehr gute Temperaturstabilität bei gleichzeitig extrem konstantem Verhältnis von Wasserstoff zu Stickstoff erreicht wird.

In einer weiteren Ausführungsform der Erfindung wird die Gaszusammensetzung erfasst. Dieses kann bevorzugt online erfolgen. Alternativ kann dieses auch durch Probennahme und Analyse im Labor erfolgen. Dieses möglich eine besonders variable Verwendung von beliebigen Quellen von Kohlenwasserstoffgemischen, insbesondere Erdgasen. Auch wird hierdurch eine Erhöhung der Sicherheit gewährleistet, da eine falsche Vorgabe des Kohlenwasserstoffgemisches als Fehlerquelle ausscheidet.

In einer weiteren Ausführungsform der Erfindung wird der Faktor H zur gezielten Einstellung des Luftstromes bei Laständerungen und/oder Änderungen der Zusammensetzung des ersten Gasstroms verwendet. Es wird somit der erste Gasstrom aktiv so verändert, wie sich der Faktor H ändert, sodass die zugeführte Gas- und insbesondere Sauerstoffmenge direkt an die geänderte Zusammensetzung des Kohlenwasserstoffgemisches angepasst wird.

Nachfolgend ist das erfindungsgemäße Verfahren anhand eines in der Zeichnung dargestellten Ausführungsbeispiels näher erläutert.

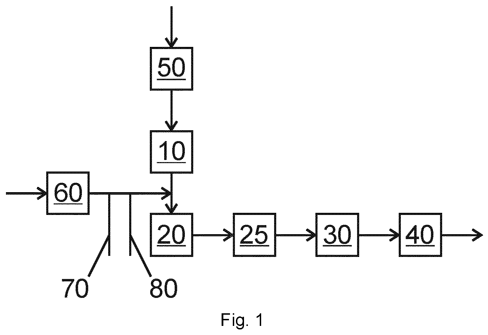

Fig. 1 Vorrichtung zur Durchführung des Verfahrens

In Fig. 1 ist eine Vorrichtung zur Durchführung des erfindungsgemäßen Verfahrens gezeigt. Das Kohlenwasserstoffgemisch, insbesondere ein Erdgas wird zunächst an einem Gassensor 50 vorbei in den Primärreformer 10 geführt. Dabei wird der erste Gasstrom mengenmäßig erfasst. Im Primärreformer 10 erfolgt eine partielle Umsetzung mit Wasserdampf zu Wasserstoff und Kohlenmonoxid (Dampfreformierung). Der aus dem Primärreformer 10 kommende Halbproduktgasstrom wird mit einem Luftstrom vereint und dem Sekundärreformer 20 zugeführt. Der Luftstrom wird über einen Luftverdichter 60 erzeugt und mit einem Drucksensor 70 und einem Temperatursensor 80 werden Druck und Temperatur erfasst, um so den Volumenstrom des Verdichters in einen stoffmengenmäßigen Luftstrom umrechnen zu können. Nach dem Sekundärreformer 20 wird das Gas gekühlt, durch eine CO Konvertierung zur Steigerung der Wasserstoffausbeute geleitet und dann wird aus dem Gasstrom das Kohlendioxid sowie andere in der Synthese unerwünschte Komponenten einer Prozessgasaufreinigung 30 abgetrennt und somit ein Gemisch aus Wasserstoff und Stickstoff in den Konverterkreislauf 40 zu Ammoniaksynthese eingebracht.

Bezugszeichen

| | |
|---|---|
| 10 | Primärreformer |
| 20 | Sekundärreformer |
| 25 | CO Konvertierung |
| 30 | Prozessgasaufreinigung |
| 40 | Konverterkreislauf |
| 50 | Gassensor |
| 60 | Luftverdichter |
| 70 | Drucksensor |
| 80 | Temperatursensor |

**Patentansprüche**

1. Verfahren zum Betreiben eines Reformers, wobei der Reformer wenigstens mit einem ersten Kohlenwasserstoffgemisch und einem zweiten Kohlenwasserstoffgemisch betrieben wird, wobei der Reformer einen Primärreformer (10) aufweist, wobei dem Primärreformer (10) ein erster Gasstrom zugeführt wird, wobei der Reformer einen Sekundärreformer (20) aufweist, wobei dem Sekundärreformer (20) der Halbproduktgasstrom aus dem Primärreformer (10) und ein Luftstrom zugeführt wird, wobei aus dem ersten Gasstrom und dem Luftstrom der Quotient aus erster Gasstrom durch Luftstrom gebildet wird, wobei ein Schwellwert vorgegeben wird, wobei bei einem Unterschreiten des Schwellwertes der Reformer abgeschaltet wird, **dadurch gekennzeichnet, dass** der Schwellwert verglichen wird mit dem Produkt aus dem Quotient aus erster Gasstrom durch Luftstrom multipliziert mit einem Faktor H, wobei der Faktor vorgegeben wird in Abhängigkeit von der chemischen Zusammensetzung des Gasstromes.

2. Verfahren nach Anspruch 1, **dadurch gekennzeichnet, dass** der Sekundärreformer (20) ein autothermer Reformer ist.

3. Verfahren nach einem der vorstehenden Ansprüche, **dadurch gekennzeichnet, dass** der Faktor H entsprechend der Stoffmengenkonzentration von Methan, Ethan, Propan und Butan vorgegeben wird.

4. Verfahren nach Anspruch 3, **dadurch gekennzeichnet, dass** der Faktor H entsprechend der Stoffmengenkonzentration von Methan, Ethan, Propan, Butan, Pentan und Hexan vorgegeben wird.

5. Verfahren nach Anspruch 4, **dadurch gekennzeichnet, dass** der Faktor H entsprechend der Stoffmengenkonzentration von Methan, Ethan, Propan, Butan, Pentan, Hexan, Kohlenmonoxid, Wasserstoff und Stickstoff vorgegeben wird.

6. Verfahren nach Anspruch 5, **dadurch gekennzeichnet, dass** der Faktor H vorgegeben wird als:

$$H = \frac{F(aktuell)}{F(0)}$$

wobei F(aktuell) ein F Wert der aktuellen Gaszusammensetzung ist, wobei F(0) der F-Wert der Gaszusammensetzung ist, für die der Reformer ausgelegt und für die der Schwellwert vorgegeben ist, wobei der F-Wert sich nach der Formel berechnet:

$$F = \frac{6N(C1) + 14N(C2) + 20N(C3) + 26N(C4) + 32N(C5) + 38N(C6) + 2N(CO) + 2N(H) - 6N(N)}{100}$$

wobei N(C1) die Stoffmengenkonzentration an $CH_4$ ist, wobei N(C2) die Stoffmengenkonzentration an $C_2H_6$ ist, wobei N(C3) die Stoffmengenkonzentration $C_3H_8$ ist, wobei N(C4) die Stoffmengenkonzentration $C_4H_{10}$ ist, wobei N(C5) die Stoffmengenkonzentration $C_5H_{12}$ ist, wobei N(C6) die Stoffmengenkonzentration $C_6H_{14}$ ist, wobei N(CO) die Stoffmengenkonzentration an Kohlenmonoxid ist, wobei N(H) die Stoffmengenkonzentration an Wasserstoff ist, wobei N(N) die Stoffmengenkonzentration an Stickstoff ist.

7. Verfahren nach einem der vorstehenden Ansprüche, **dadurch gekennzeichnet, dass** die Gaszusammensetzung erfasst wird.

8. Verfahren nach einem der vorstehenden Ansprüche, **dadurch gekennzeichnet, dass** der Faktor H zur gezielten Einstellung des Luftstromes bei Laständerungen und/oder Änderungen der Zusammensetzung des ersten Gasstroms verwendet wird.

**Claims**

1. Method of operating a reformer, wherein the reformer is operated at least with a first hydrocarbon mixture and a second hydrocarbon mixture, wherein the reformer has a primary reformer (10), wherein the primary reformer (10) is supplied with a first gas stream, wherein the reformer has a secondary reformer (20), wherein the secondary reformer (20) is supplied with the semifinished product gas stream from the primary reformer (10) and with an air stream, wherein the first gas stream and the air stream are used to form the quotient of the first gas stream divided by the air stream, wherein a threshold value is defined, wherein the reformer is shut down below the threshold value, **characterized in that** the threshold value is compared with the product of the quotient of the first gas stream divided by the air stream multiplied by a factor H, wherein the factor is defined depending on the chemical composition of the gas stream.

2. Method according to Claim 1, **characterized in that** the secondary reformer (20) is an autothermal reformer.

3. Method according to any of the preceding claims, **characterized in that** the factor H is defined in accordance with the molar concentration of methane, ethane, propane, and butane.

4. Method according to Claim 3, **characterized in that** the factor H is defined in accordance with the molar concentration of methane, ethane, propane, butane, pentane, and hexane.

5. Method according to Claim 4, **characterized in that** the factor H is defined in accordance with the molar concentration of methane, ethane, propane, butane, pentane, hexane, carbon monoxide, hydrogen, and nitrogen.

6. Method according to Claim 5, **characterized in that** the factor H is defined as:

$$H = \frac{F(current)}{F(0)}$$

wherein F(current) is an F value of the current gas composition, wherein F(0) is the F value of the gas composition for which the reformer is designed and for which the threshold value is defined, wherein the F value is calculated by the following formula:

$$F = \frac{6N(C1) + 14N(C2) + 20N(C3) + 26N(C4) + 32N(C5) + 38N(C6) + 2N(CO) + 2N(H) - 6N(N)}{100}$$

wherein N(C1) is the molar concentration of $CH_4$, wherein N(C2) is the molar concentration of $C_2H_6$, wherein N(C3) is the molar concentration of $C_3H_8$, wherein N(C4) is the molar concentration of $C_4H_{10}$, wherein N(C5) is the molar concentration of $C_5H_{12}$, wherein N(C6) is the molar concentration of $C_6H_{14}$, wherein N(CO) is the molar concentration of carbon monoxide, wherein N(H) is the molar concentration of hydrogen, wherein N(N) is the molar concentration of nitrogen.

7. Method according to any of the preceding claims, **characterized in that** the gas composition is detected.

8. Method according to any of the preceding claims, **characterized in that** the factor H is used for control of the air flow in the event of changes in load and/or changes in the composition of the first gas stream.

**Revendications**

1. Procédé d'exploitation d'un reformeur, dans lequel le reformeur est exploité au moins avec un premier mélange d'hydrocarbures et un deuxième mélange d'hydrocarbures, dans lequel le reformeur comporte un reformeur primaire (10), dans lequel le reformeur primaire (10) est alimenté par un premier flux gazeux, dans lequel le reformeur comporte un reformeur secondaire (20), dans lequel le reformeur secondaire (20) est alimenté par le flux de gaz semi-fini provenant du reformeur primaire (10) et par un flux d'air, dans lequel le premier flux de gaz et le flux d'air sont utilisés pour former le quotient du premier flux de gaz divisé par le flux d'air, dans lequel une valeur seuil est définie, dans lequel le reformeur est arrêté lorsque la valeur seuil inférieure, **caractérisé en ce que** la valeur seuil est comparée au produit du quotient du premier flux de gaz divisé par le flux d'air multiplié par un facteur H, dans lequel le facteur est défini en fonction de la composition chimique du flux de gaz.

2. Procédé selon la revendication 1, **caractérisé en ce que** le reformeur secondaire (20) est un reformeur autothermique.

3. Procédé selon l'une quelconque des revendications précédentes, **caractérisé en ce que** le facteur H est défini en fonction de la concentration molaire de méthane, d'éthane, de propane et de butane.

4. Procédé selon la revendication 3, **caractérisé en ce que** le facteur H est défini en fonction de la concentration molaire de méthane, d'éthane, de propane, de butane, de pentane et d'hexane.

5. Procédé selon la revendication 4, **caractérisé en ce que** le facteur H est défini en fonction de la concentration molaire de méthane, d'éthane, de propane, de butane, de pentane, d'hexane, de monoxyde de carbone, d'hydrogène et d'azote.

6. Procédé selon la revendication 5, **caractérisé en ce que** le facteur H est défini comme suit:

$$H = \frac{F(courant)}{F(0)}$$

où F(courant) est une valeur F de la composition actuelle du gaz, où F(0) est la valeur F de la composition du gaz pour laquelle le reformeur est conçu et pour laquelle la valeur seuil est définie, où la valeur F est calculée à l'aide de la formule suivante:

$$F = \frac{6N(C1) + 14N(C2) + 20N(C3) + 26N(C4) + 32N(C5) + 38N(C6) + 2N(CO) + 2N(H) - 6N(N)}{100}$$

où N(C1) est la concentration molaire de $CH_4$, où N(C2) est la concentration molaire de $C_2H_6$, où N(C3) est la concentration molaire de $C_3H_8$, où N(C4) est la concentration molaire de $C_4H_{10}$, où N(C5) est la concentration molaire de $C_5H_{12}$, où N(C6) est la concentration molaire de $C_6H_{14}$, où N(CO) est la concentration molaire de monoxyde de carbone, où N(H) est la concentration molaire d'hydrogène, où N(N) est la concentration molaire d'azote.

7. Procédé selon l'une quelconque des revendications précédentes, **caractérisé en ce que** la composition du gaz est détectée.

8. Procédé selon l'une quelconque des revendications précédentes, **caractérisé en ce que** le facteur H est utilisé pour contrôler le débit d'air en cas de variations de charge et/ou de variations de la composition du premier flux gazeux.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102022200572

- US 2002172630 A1